Europäisches Patentamt

European Patent Office

Office européen des brevets

(19)

(11) Veröffentlichungsnummer: **0 030 567**

**A1**

(12) **EUROPÄISCHE PATENTANMELDUNG**

(21) Anmeldenummer: 79104954.7

(22) Anmeldetag: 05.12.79

(51) Int. Cl.³: **A 23 K 1/20**
**B 01 J 2/28**

(43) Veröffentlichungstag der Anmeldung:
24.06.81 Patentblatt 81/25

(84) Benannte Vertragsstaaten:
AT BE CH DE FR GB IT LU NL SE

(71) Anmelder: W Õ V Mischfutter und Viehverwertung
Gesellschaft m.b.H.
Neuer Markt 2 Postfach 252
A-1010 Wien(AT)

(72) Erfinder: Strasser, Friedrich
Nibelungenstrasse 9
A-3380 Pöchlarn(DE)

(54) Verfahren zum Granulieren von staubigen Stoffen und Vorrichtung zur Durchführung desselben.

(57) Mit diesem Verfahren zum Granulieren von staubigen Stoffen und die Vorrichtung zur Durchführung desselben wird vorgeschlagen, besonders für die Herstellung mineralstoff- und vitaminhaltiger Futtermittel, die staubigen Stoffgemenge in eine Granulatform durch Hinzufügen geringer Mengen Wassers und Melasse zu überführen.

Dazu wird, um das gewünschte Granulat zu erhalten, dem staubigen Stoffgemenge in einem Mischgranulator (9) das Wasser und die Melasse zugesprüht, wobei, wegen der sehr hitzeempfindlichen Vitamine sehr schonend (max. 50° C) gearbeitet wird. Das so erhaltene Granulat wird anschließend in einem Fließbett-Trockner (11) für kurze Zeit bei reduzierender Temperaturführung schwebend getrocknet.

EP 0 030 567 A1

Verfahren zum Granulieren von staubigen Stoffen
und Vorrichtung zur Durchführung desselben

Die Erfindung bezieht sich auf ein Verfahren zum Granulieren von staubigen Stoffen, vorzugsweise mineralstoffhaltigen Futtermitteln.

Es ist eine bekannte Tatsache, daß staubige Stoffe sowohl bei der Herstellung als auch bei der Weiterverarbeitung und späteren Handhabung äußerst schwierig sind und eine erhebliche Belastung für Personal und Umwelt darstellen.

Nach den heutigen Erkenntnissen der Tierernährungswissenschaft ist es notwendig, daß der Mineralstoffbedarf der Tiere befriedigt wird, um eine wirksame Ernährung vornehmen zu können, was wegen der staubigen Beschaffenheit der Mineralstoffe jedoch erhebliche Schwierigkeiten mit sich bringt. Für eine wirksame Tierernährung ist es von Bedeutung, daß außer Mineralstoffen und Spurenelementen noch verschiedene Vitamine in bekannter Konzentration verfüttert werden, wobei die letzteren u.a. dem Mineralstoffwechsel dienen. Das genaue eingestellte Mengenverhältnis der Futterstoffe untereinander ist also wichtig und muß während des Herstellungsprozesses erhalten bleiben, was äußerst schwierig ist. Das Endprodukt muß ohne Zerfall lagerfähig sein. Weiterhin muß das Herstellungsverfahren auf die sehr hitzeempfindlichen Vitamine Rücksicht nehmen. Temperaturen über 50° C sind deshalb unbedingt zu vermeiden.

Außerdem dürfen keine scharfkantigen Werkzeuge verwendet werden, um die Gelatinehülle mancher Vitamine (u.a. A, E, D 3) nicht zu beschädigen bzw. ganz zu zerstören. Dies hätte eine rasche Oxydation insbesondere dieser Vitamine zur Folge. Das gleiche gilt für die Mineralstoffmischung an sich, da diese verschiedene Katalysatoren z.B. Fe, Ko, Mn, Mg, Cu, J enthält. In diesem Zusammenhang ist es auch notwendig, die Feuchtigkeit der Mischung auf einem bestimmten, geringen Wert zu halten. Schließlich spielt die Dauer des Herstellungsprozesses eine nicht unwesentliche Rolle.

Zur Herstellung solcher Futtermittel sind verschiedene Verfahren im Einsatz, deren Endprodukte a) Pulvermischungen, b) Pelletierung und Melassierung und c) Melassierung der Pulvermischung allein sind.

Die Verfütterung pulverförmiger Mischungen gestaltet sich nicht nur äußerst schwierig, da die Tiere deren Annahme verweigern, sondern sie ist aus mehreren Gründen auch für die Tierhaltung unbefriedigend. Wegen der an sich schon staubigen Beschaffenheit der beizumischenden Mineralstoffe ist es bisher nicht möglich gewesen, solches Futter den Tieren in ausreichender Menge beizubringen, woraus, besonders bei höherer Leistung beispielsweise von Milchkühen, Gesundheitsstörungen und Störungen der Fruchtbarkeit dieser Tiere folgt. Dies wurde u.a. durch zu hohe Zwischenabkalbzeiten bewiesen.

Während Abkalbzeiten von etwa 12 Monaten optimal sind (d.h. pro Kuh ein Kalb pro Jahr), haben sich in der Praxis 15 bis 20 Monate eingespielt.

Man hat deshalb versucht, die Nahrung, insbesondere den unbedingt notwendigen Mineralstoffanteil, in Form von Pellets beizubringen. Diese weisen jedoch den großen Nachteil auf, daß sie entweder scharfkantig sind oder zerfallen und dann wieder pulverförmig werden, was die Problematik wieder auf den Fall a) zurückführt. Hinzu kommt bei Pellets der werkzeugschädigende Schmirgeleffekt in den Futtermittelpressen, was die Produktionskosten zusätzlich erhöht. Auch die Bindung von Melasse an die Pellets brachte keine Vorteile.

Die Herstellung eines nur melassierten Produktes brachte ebenfalls keine Lösung, da der Melasseanteil nicht über 15% gesteigert werden konnte, was aber zur Staubbindung nicht ausreicht. Steigert man den Melasseanteil, so wird zwar der staubförmige Mineralstoffanteil besser gebunden, die Mischung verliert jedoch ihre Förderfähigkeit in den Produktionsanlagen vollständig.

Auch das Zugeben von Ölen hat keine Lösung des Problems gebracht. In flüssiger Form vorliegende Vitamine lassen sich ebenfalls nicht in Stäube einmischen.

Schließlich wurde auch wegen der damit verbundenen Vorteile überlegt, die Mineralstoff-Futter-Mischung zu granulieren. Granulierverfahren sind an sich bekannt. So z.B. aus der Düngemittelproduktion. Wegen des notwendigen Vitaminzusatzes im Tierfutter können die bekannten Granulierverfahren jedoch nicht eingesetzt werden, weil dabei mit höheren Temperaturen, im Regelfall bis zu 120 bis 130° C gearbeitet wird, eine vitamineenthaltende Mischung jedoch nur mit maximal 50° C beaufschlagt werden darf.

Der Erfindung liegt daher die Aufgabe zugrunde, ein wirtschaftliches Verfahren samt Vorrichtung zur Durchführung desselben zu besitzen, mit denen staubige Stoffe, insbesondere mineralstoffhaltige Gemenge, die auch noch hitzeempfindliche Vitamine enthalten können, bei voller Erhaltung des Mischungsverhältnisses des Staubes in eine nichtstaubende Form überführt werden können, die von Tieren ohne Schwierigkeiten aufgenommen werden wobei der Herstellungsprozeß sowohl für die zu verarbeitenden staubförmigen Stoffgemenge als auch für die Werkzeuge der Verarbeitungsmaschinen schonend ablaufen soll.

Erfindugsgemäß wird dies dadurch erreicht, daß man einer Charge des staubigen Gemenges geringe Mengen Wassers und eines feuchten Bindemittels zugibt, in dem Gemenge homogen verteilt, diese granuliert und anschließend trocknet, wobei das Mischungsverhältnis des Gemenges voll erhalten bleibt.

Als vorteilhaft für mineralstoff- und vitaminhaltige Stäube bzw. Pulver hat sich erwiesen, das Verfahren so durchzuführen, daß man dem pulvrigen Gemenge aus Mineralstoffen und Vitaminen geringe Mengen Wasser und Melasse zugibt und diese in dem Gemenge homogen verteilt und dabei die gesamte Mischung in eine Granulatform überführt und danach das so erhaltene Granulat bei geringer Temperatur für kurze Zeit trocknet.

Eine Ausführungsvariante sieht vor, daß man bei einer Materialtemperatur von maximal 50° C einer staubförmigen Charge Mineralstoff-Vitamingemenge von etwa 1000 kp 60 bis 100 kp Melasse und 10 - 40 1 Wasser zusprüht, für etwa 5 Minuten das Ganze mischt und granuliert und anschließend das so entstandene Granulat schwebend für etwa 1,5 Minuten von ca. 47° C beginnend bis auf ca. 24° C reduzierend trocknet.

Eine vorteilhaft ausgebildedete Vorrichtung zur Durchführung des erfindungsgemäß vorgeschlagenen Verfahrens zeichnet sich dadurch aus, daß Rohstoffsilozellen für die einzelnen staubigen Komponenten des Gemenges sowie Lagerbehälter für die flüssigen Zuschlagstoffe vorgesehen sind, jeder Rohstoffkomponente und jedem Zuschlagstoff eine Dosier- und/oder Wägeinheit zugeordnet ist, die ihrerseits über Versorgungsleitungen mit einer oder mehreren Einfüllöffnungen eines Chargen-Mischgranulators verbunden sind, der über einen drehbaren Austragteller verfügt, welchem ein Trockner nachgeschaltet ist, der in eine Transportleitung zu den Fertigproduktzellen mündet.

Eine Ausführungsvariante der Vorrichtung sieht vor, mehrere Rohstoffzellen und Lagerbehälter für einen Zuschlagstoff einer Wägeinheit zuzuordnen. Ein vorteilhafter Ausführungsfall der Vorrichtung weist unter Druck stehende Versorgungsleitungen auf.

Für die Aufgabe von flüssigen Zuschlagstoffen sind im Mischgranulator Sprühdüsen vorgesehen.

Eine besonders vorteilhafte Ausführungsform des Trockners besteht aus einem sog. Fließbett-Trockner mit mehreren Zonen unterschiedlicher Temperaturbeaufschlagung.

Die durch die Erfindung erreichten Vorteile sind im wesentlichen darin zu sehen, daß einerseits staubige Gemenge in ein Granulat überführt werden können, andererseits Vitamine und andere temperaturempfindliche Stoffe voll erhalten bleiben, und die notwendigen Mineralstoffmengen dem Tier sicher auch separat verfüttert werden können, keine Annahmeverweigerungen wie bei pulvrigen bzw. staubigen Gemengen mehr auftreten, Extraarbeitsgänge wie z.B.

die Beimischung des staubigen Gemenges zu Grünfuttersilagen, Rübensilagen etc. vermieden werden, das Endprodukt lagerfähig ist und der Produktionsprozeß wirtschaftlich abläuft, außerdem sowohl die Herstellung, der Transport und die Verfütterung, d.h. Handhabung des Endproduktes, umweltfreundlich besonders für das damit beschäftigte Personal vor sich gehen und schließlich Futterverluste im Trog, Streu etc. vollständig wegfallen.

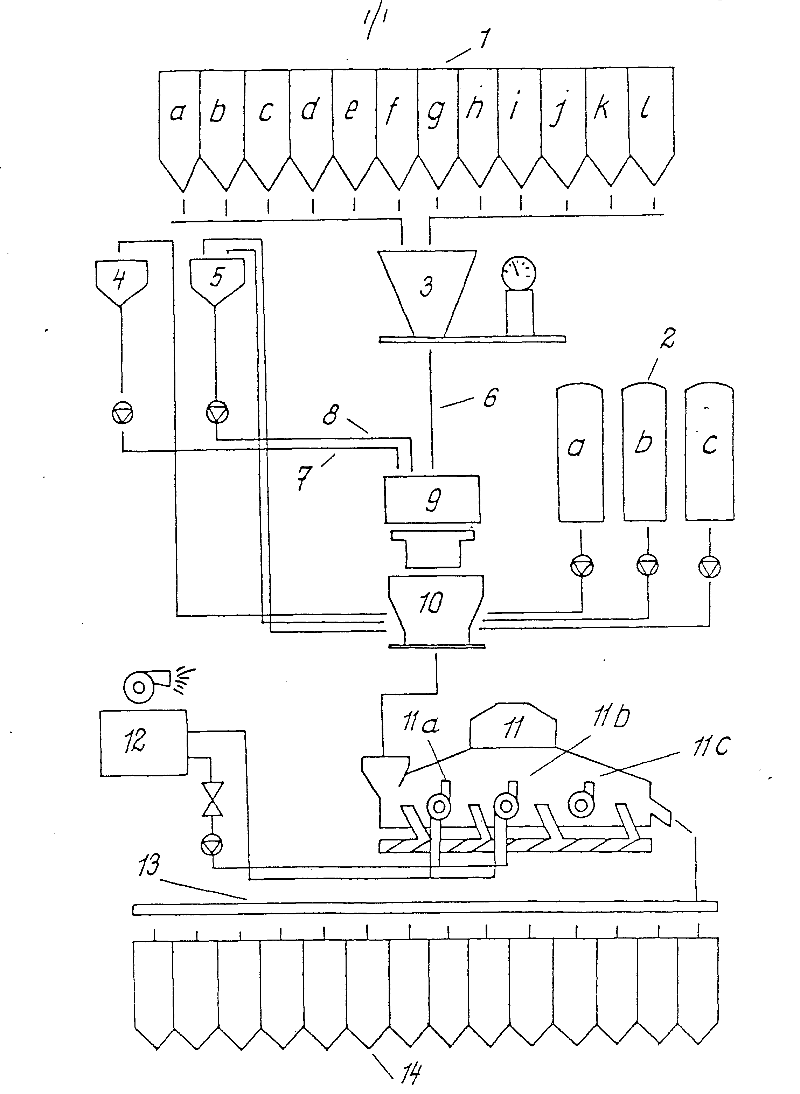

Nachstehend wird die Erfindung anhand eines in der Abbildung dargestellten Ausführungsbeispieles näher erläutert.

Es zeigt:

Die Abbildung ein Fließschema des Verfahrens.

Die für die Mineralstoff-Foutererzeugung verwendeten Rohstoffe wie beispielsweise defluoriertes Rohphosphat, Kalziumphosphat, kohlensaurer Futterkalk, Viehsalz, Magnesiumoxyd, Kynofos, Bolus alba, Vitamine etc., besitzen eine sehr feine staubförmige Struktur und aus diesem Grunde sind sie schwierig zu fördern, zu dosieren. Die Lagerung dieser Rohstoffe wird in den Zellen 1 A - L vorgenommen und über Dosierschieber und Schnecken abgefördert. Die flüssigen Zuschlagstoffe wie Wasser und Melasse befinden sich in den Lagerbehältern 2 A - C.

Während die staubförmigen Rohstoffe aus den Rohstoffzellen 1 A - L bereits vordosiert der Chargenwaage 3 zugeführt werden, fließen die flüssigen Zuschlagstoffe aus den Lagerbehältern 2, ebenfalls vordosiert, den Flüssigkeitswaagen 4 und 5 zu. Beispielsweise wird Wasser aus dem Lagerbehälter A der Flüssigkeitswaage 4 und Melasse aus den Behältern B und C der Flüssigkeitswaage 5 zugeführt. Nachdem eine Charge von 1000 kg auf der Waage 3 verwogen ist und zu dieser Charge in der Flüssigkeitswaage 4 etwa 10 - 40 l Wasser und in der Flüssigkeitswaage 5 ca. 60 - 100 kp Melasse verwogen sind, werden die so verwogenen Komponenten durch die Versorgungsleitungen 6, 7 und 8 in den Mischgranulator 9 gegeben, wobei die flüssigen Zuschlagstoffe aus den Flüssigkeitswaagen 4 und 5 vorzugsweise über in der Abbildung nicht dargestellte Sprühdüsen in den Mischraum aufgegeben werden. Die Versorgungsleitungen 7 und 8 stehen vorzugsweise unter Druck, während das staubförmige Gemenge aus der Chargenwaage 3 ggf. im freien Fall durch die Versorgungsleitung 6 dem Mischgranulator 9 zugeführt wird.

Die in den Mischgranulator 9 eingegebenen, verwogenen Komponenten werden dort miteinander vermischt. Nach einer Mischdauer von etwa 5 Minuten erfolgt dort, bei einer Materialtemperatur von max. 50° C, die Granulierung.

Für den Granuliervorgang selbst ist unbedingte Voraussetzung, daß die Zugabe der einzelnen Komponenten unter exakter Dosierung erfolgt und die Verweilzeit der Mischung im Mischgranulator eine bestimmte Zeit, beispielsweise 5 Minuten, nicht übersteigt. D.h. daß die Drehzahl des Mischgranulators ebenfalls genau eingehalten werden muß. Das so erhaltenen Granulat besitzt eine relativ hohe Feuchtigkeit und ist noch sehr empfindlich. Deshalb ist vorgesehen, dieses Granulat über einen schonend arbeitenden rotierenden Austragteller 10 einem vorzugsweise als Fließbandtrockner ausgebildeten Trockner 11 zuzuführen. Mit der Austragung des Granulates wird das Verfahren von einem Chargenverfahren in ein kontinuierliches Verfahren überführt.

Ein Fließbett-Trockner wird vorgesehen, damit das Granulat in Schwebe gehalten wird und eine Oberflächentrocknung vorgenommen werden kann und eine gute Rieselfähigkeit und Abriebfestigkeit des Granulats erreicht wird, was andererseits bedeutet, daß die Lagerfähigkeit des Endproduktes so gut ist, daß ein Zerfall der einzelnen Partikel nicht auftritt.

Die für die Trocknung erforderliche Wärmemenge wird vorzugsweise aus einer Heizanlage 12 den ersten beiden Zonen des Fließbett-Trockners zugeführt, die mit 11a und b bezeichnet sind. In diesen beiden Zonen wird die Trocknung des Granulates vorgenommen, wobei die Materialtemperatur 50° C auf keinen Fall, wegen der darin vorhandenen Vitamine, überschreiten darf.

Als günstig hat sich eine Materialtemperatur in der Zone 11 a von etwa 45 - 47° C und in der Zone 11 b von etwa 38 - 40° C erwiesen. Den beiden Zonen, 11 a und b, schließt sich noch eine Zone, 11 c, an, in der das Granulat bei etwa 22 - 24° C gekühlt wird. Die Verweilzeit des Granulates in dem Fließbett-Trockner beträgt ca. 1 1/2 Minuten.

Dem Fließbett-Trockner kann sich noch eine Siebvorrichtung 13 anschließen, über die das Granulat den Fertigwarenzellen 14 zur Endlagerung und anschließenden Abpackung zugeführt wird.

Die Zwischenschaltung eines Siebes empfiehlt sich besonders zur Abscheidung eventueller Überkorngrößen.

Die zur automatischen Steuerung des Verfahrens notwendigen Einrichtungen wie beispielsweise Druckmeßdosen, Temperaturregler, Dosiervorrichtungen usw. sind in der Abbildung nicht dargestellt, da sie zum Stand der Technik
gehören und notorisch bekannt sind. Selbstverständlich
kann das Verfahren auch vollautomatisch gesteuert werden
und in bekannter Weise sämtliche Verfahrenszustände auf
einer Schalttafel sichtbar gemacht werden.

Das Verfahren gemäß der Erfindung ist naturgemäß nicht
auf ein Verfahren zum Granulieren von staubförmigen
Mineralstoffen und vitaminhaltigen Futtermitteln beschränkt, sondern es ist überall dort mit Vorteil einzusetzen, wo staubförmige Gemenge, die noch dazu temperaturempfindlich sind, in ein Granulat überführt werden
sollen.

Patentansprüche

1. Verfahren zum Granulieren von staubigen Stoffen, vorzugsweise mineralstoffhaltigen Futtermitteln, dadurch gekennzeichnet, daß man einer Charge des staubigen Gemenges geringe Mengen Wassers und eines feuchten Bindemittels zugibt, in dem Gemenge homogen verteilt, dieses granuliert und anschließend trocknet, wobei das Mischungsverhältnis des Gemenges voll erhalten bleibt.

2. Verfahren nach Anspruch 1 dadurch gekennzeichnet, daß man dem staubigen Gemenge aus Mineralstoffen und Vitaminen geringe Mengen Wasser und Melasse zugibt und diese in dem Gemenge homogen verteilt und dabei die gesamte Mischung in eine Granulatform überführt, danach das so erhaltene Granulat bei geringer Temperatur für kurze Zeit trocknet.

3. Verfahren nach Anspruch 1 und 2, dadurch gekennzeichnet, daß man bei einer Materialtemperatur von maximal 50° C einer staubförmigen Charge Mineralstoff-Vitamingemenge von etwa 1000 kp 60 bis 100 kp Melasse und 10 - 40 l Wasser zusprüht, für etwa 5 Minuten das Ganze mischt und granuliert und anschließend das so entstandene Granulat schwebend für etwa 1,5 Minuten von ca. 47° C beginnend bis auf ca. 24° C reduzierend trocknet.

4. Vorrichtung zur Durchführung des Verfahrens gemäß Anspruch 1 dadurch gekennzeichnet, daß Rohstoffsilozellen (1A-L) für die einzelnen staubigen Komponenten des Gemenges sowie Lagerbehälter (2A-C) für die flüssigen Zuschlagstoffe vorgesehen sind, jeder

0030567

Rohstoffkomponente (1) und jedem Zuschlagstoff (2) eine Dosier- und/oder Wägeeinheit (3,4,5) zugeordnet ist, die ihrerseits über Versorgungsleitungen (6,7, 8) mit einer oder mehreren Einfüllöffnungen eines Chargen-Mischgranulators (9) verbunden sind, der über einen drehbaren Austragteller (10) verfügt, welchem ein Trockner (11) nachgeschaltet ist, der in eine Transportleitung zu den Fertigproduktzellen (12) mündet.

5. Vorrichtung gemäß Anspruch 4 dadurch gekennzeichnet, daß mehreren Rohstoffzellen (1A-L) und Lagerbehältern für einen Zuschlagstoff jeweils eine Wägeeinheit (3) zugeordnet ist.

6. Vorrichtung gemäß Anspruch 4 und 5 dadurch gekennzeichnet, daß die Versorgungsleitungen (6,7,8) unter Druck stehen.

7. Vorrichtung gemäß Anspruch 4 bis 6 dadurch gekennzeichnet, daß für die Aufgabe von flüssigen Zuschlagstoffen im Mischgranulator (9) Sprühdüsen vorgesehen sind.

8. Vorrichtung gemäß Anspruch 4 bis 7, dadurch gekennzeichnet, daß der Trockner (11) aus einem sog. Fließbett-Trockner mit mehreren Zonen (11 a-c) unterschiedlicher Temperaturbeaufschlagung besteht.

9. Vorrichtung gemäß Anspruch 4 bis 8, dadurch gekennzeichnet, daß zwischen dem Trockner (11) und den Fertigproduktzellen (14) ein Sieb (13) vorgesehen ist.

Europäisches
Patentamt

**EUROPÄISCHER RECHERCHENBERICHT**

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| X | CH - A - 588 818 (S.A.R.A.P.-CEDIA)<br>* Anspruch; Spalte 1, Zeilen 1 bis 13; Spalte 3, Beispiel 1 *<br>-- | 1,2 | A 23 K 1/20<br>B 01 J 2/28 |
| | DE - B - 1 227 430 (KENNEDY VAN SAUN MFG. & ENG. CORPORATION)<br>* Anspruch 1; Spalte 1, Zeilen 18 bis 32 *<br>-- | 1 | |
| | DE - A - 2 305 520 (HOOGOVENS IJMUIDEN B.V.)<br>* Anspruch 1 *<br>-- | 1 | RECHERCHIERTE SACHGEBIETE (Int. Cl.)<br><br>A 23 K 1/00<br>B 01 J 2/00 |
| A | DE - A - 2 123 414 (H. HOLM)<br>* ganzes Dokument *<br>-- | | |
| A | FR - A - 2 007 036 (MANUFACTURE D'ENGRAIS ORGANIQUES MEOC S.A.)<br>* ganzes Dokument *<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-07-1980 | SCHULTZE |

EPA form 1503.1   06.78